# EUROPÄISCHE PATENTSCHRIFT

(11) **EP 1 118 783 B1**
(45) Veröffentlichungstag und Bekanntmachung des Hinweises auf die Patenterteilung: **02.03.2005**
(21) Anmeldenummer: 00126766.5
(22) Anmeldetag: 06.12.2000
(51) Int. Cl.: F16C 33/62, F01C 17/06

(54) **Axialkugellager**
Thrust ball bearing
Butée à billes

(30) Priorität: 21.01.2000 DE 10002557
(43) Veröffentlichungstag der Anmeldung: 25.07.2001
(73) Patentinhaber: INA-Schaeffler KG, 91074 Herzogenaurach (DE)
(72) Erfinder: Pflug, Rainer, 91560 Heilsbronn (DE); Miereisz, Wolfgang, 91074 Herzogenaurach (DE); Motz, Thomas, 91074 Herzogenaurach (DE)

(56) Entgegenhaltungen:
- DE-A- 3 248 634
- DE-A- 10 013 211
- DE-A- 19 711 389
- US-A- 4 108 689
- US-A- 5 853 660
- US-A- 5 921 684

## Beschreibung

### Anwendungsgebiet der Erfindung

Die Erfindung betrifft ein Axialkugellager nach dem Oberbegriff von Anspruch 1.

### Hintergrund der Erfindung

Ein derartiges Lager ist aus der US 5,921,684 vorbekannt. Die dort in einem Scroll-Verdichter eingesetzten kreisringartigen Lagerscheiben sind einsatzgehärtet. Derartige Lagerscheiben weisen insbesondere bei hohen Lasten ein schlechtes Verschleißverhalten auf, d. h. die Aufkohlungszone bricht im Übergangsbereich zum weichen Kern hin bei nicht zu vermeidenden Überlastspitzen ein. Es ist weiter von Nachteil, dass einsatzgehärtete Lagerscheiben aufgrund fehlender Karbidbildung insbesondere unter den Bedingungen einer Mangelschmierung einem hohen abrasiven Verschleiß unterliegen. Nachteilig ist außerdem, dass das Einsatzhärten aufgrund erhöhter Diffusionszeiten langwierig und somit teuer ist. Um diese Nachteile zu minimieren wurde bisher vorgeschlagen, dass einsatzgehärtete Lagerscheiben mit einem Sicherheitswert 7 auszustatten sind. Damit ist gemeint, dass in einer beliebigen Tiefe von der Laufbahnoberfläche der 7-fache Wert der in dieser Tiefe unter der Laufbahnoberfläche durch das Abwälzen der Wälzkörper erzeugten dynamischen Scherbeanspruchung deren Härte in dieser Tiefe nicht unterschreitet. Mit anderen Worten, die Härte in dieser Tiefe muss um den Faktor 7 größer als die Scherbeanspruchung in dieser Tiefe sein oder die maximale zulässige Beanspruchung hinsichtlich der Schubspannung darf nur in Höhe von 1/7 der Härte in dieser Bauteiltiefe erfolgen. Dieser Sicherheitswert ist jedoch bei höheren Belastungen nicht mehr einhaltbar und es kommt zu Materialausbrüchen durch Schälungen.

### Zusammenfassung der Erfindung

Aufgabe der Erfindung ist es daher, die kreisringartigen Lagerscheiben so auszugestalteten, dass sie einen hohen Dauerfestigkeitswert aufweisen.

Erfindungsgemäß wird diese Aufgabe nach dem kennzeichnenden Teil von Anspruch 1 dadurch gelöst, dass die kreisringartigen Lagerscheiben aus einem unlegierten, niedrig legierten oder hoch legierten durchgehärteten Stahl hergestellt sind.

Unter Durchhärten ist dabei in fachgemäßer Weise das Erzielen eines gleichmäßigen martensitischen Gefüges über den gesamten Querschnitt des Bauteiles beim Härtevorgang zu verstehen. Durch das durchgehende martensitische Gefüge ist der vorstehend beschriebene Sicherheitswert entsprechend dem Faktor 7 nicht mehr erforderlich, es besteht lediglich die Forderung, dass die Härte größer als die sich aus der Belastung ergebenden Vergleichsspannung sein muss, d. h. der bisherige Faktor 7 kann deutlich unterschritten werden. Daraus ergibt sich bei ansonsten gleicher Härte eine wesentlich höhere Belastung der erfindungsgemäß durchgehärteten kreisringartigen Lagerscheiben.

Vorteilhafte Weiterbildungen der Erfindung sind in den Ansprüchen 2 bis 4 beschrieben.

In einem weiten erfindungsgemäßen Sinne sind die Lagerscheiben aus einem unlegierten, niedrig legierten oder hoch legierten Stahl hergestellt, wobei ein Stahl als unlegiert bezeichnet wird, wenn er weniger als 0,5 % Si, 0,8 % Mn, 0,1 % Al oder Ti, 0,25 % Cu enthält. In niedrig legierten Stählen sind weniger als 5 % an Legierungselementen vorhanden, während Stähle mit mehr als 5 % Legierungsbestandteilen hoch legiert sind.

Aus Anspruch 2 geht hervor, dass die Lagerscheiben aus einem Stahl der Marke C 45, C 55, Ck 67, C 75, 100 Cr 6 oder 85 Mn 3 hergestellt sind. All die aufgeführten Stähle sind in der Lage, beim Härten nach dem Austenitisieren durch Abschrecken eine vollständige Umwandlung in Martensitgefüge zu erreichen, wobei die kritische Abkühlungsgeschwindigkeit verhältnismäßig niedrig ist, so dass auch im Kern des Werkstückes die gewünschte Härte einstellbar ist.

Die erzielbare Härte des Martensits nimmt mit dem Kohlenstoffgehalt zu, wobei jedoch bei Kohlenstoffgehalten von oberhalb 0,8 % die Martensitumwandlung bei Abkühlung bis Raumtemperatur nicht mehr vollständig erfolgt, d. h. der verbleibende Restaustenit führt zu etwas geringeren Härtewerten. Der Stahl der Marke C 45 mit 0,42 bis 0,50 % C, 0,15 bis 0,35 % Si, 0,50 bis 0,80 % Mn, ≤ 0,045 % P und ≤ 0,045 % S lässt dabei Härtewerte von ≥ 600 HV zu. Der Stahl C 55 mit 0,53 bis 0,61 % C, 0,15 bis 0,35 % Si, 0,60 bis 0,90 % Mn, ≤ 0,025 % P, ≤ 0,017 % S erlaubt dabei Härtewerte ≥ 635 HV. Für den Stahl der Marke Ck 67, mit einem Kohlenstoffgehalt im Bereich zwischen 0,68 und 0,74 %, 0,15 bis 0,35 % Si, 0,60 bis 0,90 % Mn, ≤ 0,035 % P, ≤ 0,035 % S werden dabei Härtewerte ≥ 670 HV erzielt. Das gleiche trifft härtemäßig für den Federstahl C 75 zu, der 0,70 bis 0,80 % C, 0,15 bis 0,35 % Si, 0,60 bis 0,80 % Mn, ≤ 0,045 % P, ≤ 0,045 % S enthält. Die Legierungselemente Chrom und Mangan in den Stählen 100 Cr 6 und 85 Mn 3 mit etwa 1,35 % bis 1,55 % bzw. 0,7 bis 0,85 % sorgen dafür, dass die kritische Abkühlungsgeschwindigkeit herabgesetzt wird und damit die Härtbarkeit bedeutend gesteigert ist. Für die genannten Stähle wird eine Härte von ≥ 700 HV angegeben. Außerdem tragen die Legierungselemente Chrom und Mangan in vorteilhafter Weise zur Karbidbildung bei, so dass solche Stähle besonders verschleißfest sind, d. h. widerstandsfähig gegen Abrasion sind.

Nach den Ansprüchen 3 und 4 ist vorgesehen, dass die Lagerscheiben durch einen spanlosen Formgebungsvorgang hergestellt sein sollen, wobei die Umformgeschwindigkeit ≤ 2 m/min ist. Durch die niedrige Umformgeschwindigkeit und die Einbringung von Druckspannungen ist sichergestellt, dass trotz der die Kaltumformbarkeit erschwerenden Legierungselemente Chrom, Mangan und Kohlenstoff ein Fließen des Materials ermöglicht wird und so die Bauteile mit einer großen Form- und Maßgenauigkeit herstellbar sind. Zudem stellt das spanlose Fertigungsverfahren einen günstigen Faserverlauf im Material sicher, der eine zusätzliche Voraussetzung für gute Dauerfestigkeitseigenschaften ist.

Die Erfindung wird an nachstehendem Ausführungsbeispiel näher erläutert.

### Kurze Beschreibung der Zeichnungen

Es zeigen:
- Figur 1: einen teilweisen Längsschnitt durch einen Scroll-Kompressor im Bereich der Spiralen,
- Figur 2: eine Draufsicht auf eine kreisringartige Lagerscheibe und
- Figur 3: eine grafische Darstellung von Spannungszuständen in Abhängigkeit vom Randabstand.

### Ausführliche Beschreibung der Zeichnungen

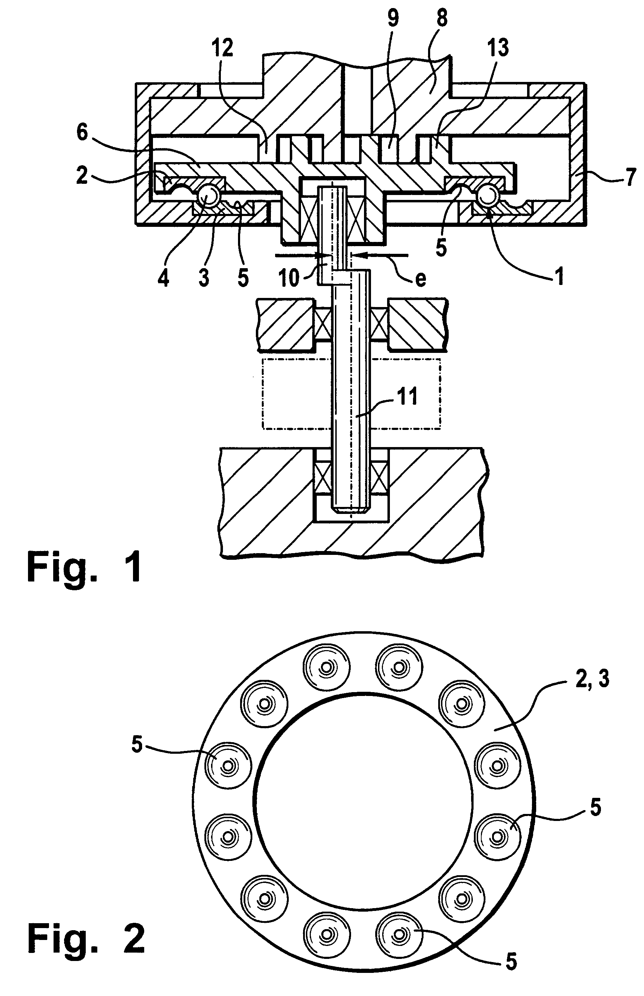

Der in Figur 1 schematisch teilweise dargestellte Scroll-Kompressor weist das Gehäuse 7 auf, in dessen oberen Teil die Spirale 8 mit ihren hervorstehenden Spiralelementen 12 fest angeordnet ist. Die andere beweglich angeordnete Spirale 6 greift mit dem Spiralelement 13 in das Spiralelement 12 der fest angeordneten Spirale 8 ein, so dass der Verdichtungsraum 9 gebildet ist, der bei einer relativen Bewegung der beiden Spiralen 6 und 8 zueinander verkleinert oder vergrößert wird, so dass ein gasförmiges oder flüssiges Medium förderbar ist. Die Spirale 6 ist in ihrem Zentrum mit dem Kurbelzapfen 10 der Welle 11 verbunden, so dass sie bei deren Drehung mit der Exzentrizität e in der fest angeordneten Spirale 8 bewegbar ist. Die Spirale 6 ist über das Axialkugellager 1 im Gehäuse 7 abgestützt, wobei in ihr die erste kreisringartige Lagerscheibe 2 und im Gehäuse 7 die zweite Lagerscheibe 3 untergebracht sind, so dass die einzelnen Lagerkugeln 4 auf separaten Kreisbahnen 5 umlaufen, wie insbesondere die zugehörige Figur 2 zeigt, wo in einer Draufsicht die Lagerscheibe 2, 3 mit den vertieften Kreisbahnen 5 dargestellt ist.

Die in Figur 2 gezeigten kreisringartigen Lagerscheiben 2, 3 sind durch einen spanlosen Formgebungsvorgang auf einem geeigneten Formgebungsapparat, beispielsweise einer Hydraulikpresse oder einer Kniehebelpresse mit einer Umformgeschwindigkeit von ≤ 2 m/min ausgehend von einer aus einem Blech ausgestanzten Platine hergestellt worden. Als Material wurde ein Stahl der Marke Ck 75 verwendet, der 0,70 bis 0,80 % C, 0,15 bis 0,35 % Si und 0,50 bis 0,80 % Mn enthielt, wobei durch das beigefügte k ein besonders niedriger Phosphor- und Schwefelgehalt mit ≤ 0,035 % bzw. ≤ 0,015 % angegeben ist. Nach einem Härte- und Anlaßvorgang wurde für dieses durchhärtbare Material eine Härte von 700 HV ermittelt. Diese Scheibe kann mit einer Sicherheit von 1 belastet werden, d. h. die Härte 700 HV lässt eine maximale zulässige Belastung entsprechend von ebenfalls 700 HV bezogen auf die Vergleichsspannung zu.

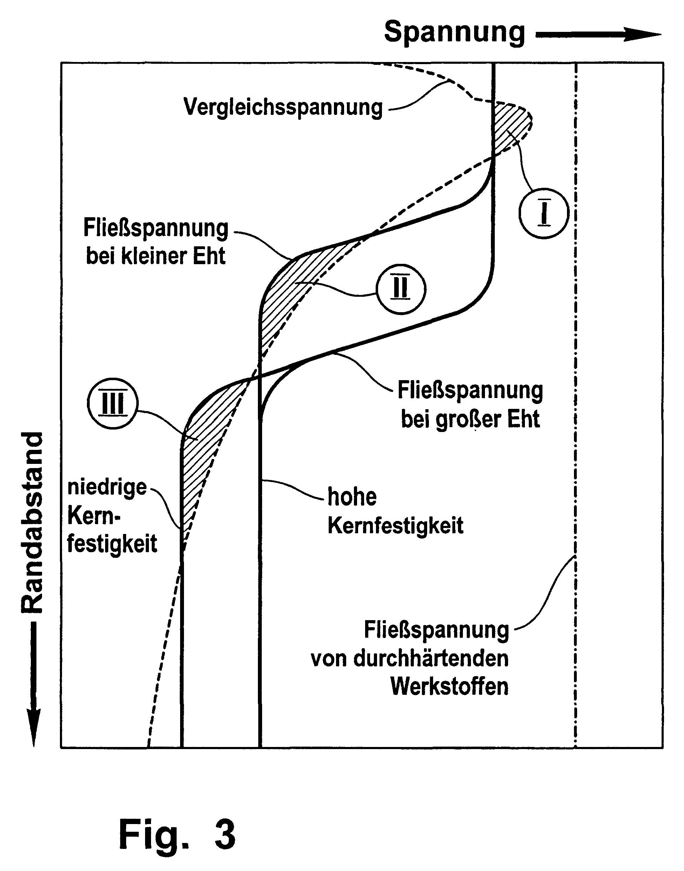

Der grafischen Darstellung in Figur 3 ist zu entnehmen, dass in der Zone die Fließgrenze eines Werkstoffes bei dessen Randschichthärtung im Bereich des Spannungsmaximums der Vergleichsspannung überschritten ist, d. h. es tritt eine unerwünschte Verformung bei hinreichend hoher Hertz'scher Pressung auf. In der Zone II verformt sich der Werkstoff plastisch, da die Härtungstiefe zu klein gewählt wurde. In der Zone III treten schließlich plastische Verformungen auf, wenn die Härte bzw. die Fließspannung des Kernwerkstoffes zu niedrig liegt. Die rechtsseitig liegende, von oben nach unten reichende strichpunktierte Linie zeigt die Fließspannung eines durchgehärteten Materials. Es ist erkennbar, dass man immer auf der sicheren Seite liegt, da die aus der Härte umwertbare Festigkeit bzw. Fließgrenze des durchgehärteten Materials an allen Stellen über dem Verlauf der Vergleichsspannung liegt. Bezogen auf den erfindungsgemäßen Fall heißt das, dass die Härte in einer bestimmten Tiefe nicht um den Faktor 7 größer ist als die Scherbeanspruchung sein muss, sondern dieser Sicherheitswert durch die Erfindung auf 1 verringert ist.

### Bezugszeichen

- 1: Axialkugellager
- 2: erste kreisringartige Lagerscheibe
- 3: zweite kreisringartige Lagerscheibe
- 4: Lagerkugel
- 5: Kreisbahn
- 6: umlaufende Spirale
- 7: Gehäuse
- 8: fixierte Spirale
- 9: Verdichtungsraum
- 10: Kurbelzapfen
- 11: Welle
- 12: Spiralelement
- 13: Spiralelement
- I, II, III: Bereich
- e: Exzentrizität

## Patentansprüche

1. Axialkugellager (1) mit einer ersten und einer zweiten voneinander beabstandeten kreisringartigen Lagerscheibe (2, 3), die sich exzentrisch zueinander bewegen, so dass zwischen diesen angeordnete Lagerkugeln (4) auf zugehörigen Kreisbahnen (5) abrollen, wobei die erste Lagerscheibe (2) mit einer auf einem Kurbelzapfen (10) einer Welle (11) gehaltenen umlaufenden Spirale (6) eines Verdichters vom Typ "Scroll" verbunden ist, die zweite Lagerscheibe (3) von einem Gehäuse (7) aufgenommen ist, so dass beim Zusammenwirken von umlaufender (6) und einer im Gehäuse (7) fest fixierten zweiten Spirale (8) ein in seinem Volumen veränderbarer Verdichtungsraum (9) zur Förderung eines Mediums gebildet ist und entstehender Axialdruck der umlaufenden Spirale (6) über die Lagerkugeln (4) aufgenommen ist, **dadurch gekennzeichnet, dass** die Lagerscheiben (2, 3) aus einem unlegierten, niedrig legierten oder hoch legierten durchgehärteten Stahl hergestellt sind.

2. Axialkugellager (1) nach Anspruch 1, **dadurch gekennzeichnet, dass** die Lagerscheiben (2, 3) aus einem Stahl der Marke C 45, C 55, Ck 67, C 75, 100 Cr 6 oder 85 Mn 3 hergestellt sind.

3. Axialkugellager (1) nach Anspruch 1, **dadurch gekennzeichnet, dass** die Lagerscheiben (2, 3) durch einen spanlosen Formgebungsvorgang hergestellt sind.

4. Axialkugellager (1) nach Anspruch 4, **dadurch gekennzeichnet, dass** die Umformgeschwindigkeit ≤ 2 m/min ist.

## Claims

1. Thrust ball bearing (1) having a first annular bearing disc (2) and a second annular bearing disc (3), which bearing discs are spaced apart from one another and move eccentrically with respect to one another, so that bearing balls (4) arranged between them roll along associated circular paths (5), the first bearing disc (2) being connected to a revolving spiral (6), which is held on a crank pin (10) of a shaft (11), of a scroll-type compressor, the second bearing disc (3) being accommodated by a housing (7), so that a compression space (9) of variable volume for conveying a medium is formed during the interaction of revolving spiral (6) and a second spiral (8) which is securely fixed in the housing (7), and axial pressure which is produced by the revolving spiral (6) is absorbed via the bearing balls (4), **characterized in that** the bearing discs (2, 3) are made from an unalloyed, low-alloy or high-alloy, fully hardened steel.

2. Thrust ball bearing (1) according to Claim 1, **characterized in that** the bearing discs (2, 3) are made from a steel of type C 45, C 55, Ck 67, C 75, 100 Cr 6 or 85 Mn 3.

3. Thrust ball bearing (1) according to Claim 1, **characterized in that** the bearing discs (2, 3) are produced by a chipless shaping operation.

4. Thrust ball bearing (1) according to Claim 4, **characterized in that** the deformation rate is ≤ 2 m/min.

## Revendications

1. Roulement axial à billes (1) comprenant un premier et un second disques de roulement (2, 3) en forme d'anneau circulaire et espacés l'un de l'autre, qui se déplacent de façon excentrée l'un vers l'autre, de sorte que des billes de roulement (4) disposées entre ces disques roulent sur des trajectoires circulaires (5) spécifiques, le premier disque de roulement (2) étant relié à une spirale (6) rotative maintenue sur un maneton de manivelle (10) d'un arbre (11), d'un compresseur du type "Scroll", le second disque de roulement (3) étant réceptionné par un boîtier (7), de sorte que, lors de l'action conjuguée de la spirale rotative (6) et d'une seconde spirale (8) fixée à demeure dans le boîtier (7), il se forme un espace de compression (9) variable dans son volume pour le transport d'un fluide et la traction axiale qui se forme de la spirale (6) rotative est réceptionnée par les billes de roulement (4), **caractérisé en ce que** les disques de roulement (2, 3) sont fabriqués à base d'un acier trempé non allié, faiblement allié ou fortement allié.

2. Roulement axial à billes (1) selon la revendication 1, **caractérisé en ce que** les disques de roulement (2, 3) sont fabriqués à base d'un acier de la marque C 45, C 55, Ck 67, C 75, 100 Cr 6 ou 85 Mn 3.

3. Roulement axial à billes (1) selon la revendication 1, **caractérisé en ce que** les disques de roulement (2, 3) sont fabriqués par une opération de façonnage sans enlèvement de copeaux.

4. Roulement axial à billes (1) selon la revendication 4, **caractérisé en ce que** la vitesse de formage est ≤ 2 m/min.
